Europäisches Patentamt

European Patent Office

Office européen des brevets

(19)

(11) Veröffentlichungsnummer: **0 052 822**
A2

(12)

# EUROPÄISCHE PATENTANMELDUNG

(21) Anmeldenummer: 81109545.4

(22) Anmeldetag: 06.11.81

(51) Int. Cl.³: **H 04 N 7/16**

(30) Priorität: 21.11.80 DE 3043839

(43) Veröffentlichungstag der Anmeldung:
02.06.82 Patentblatt 82/22

(84) Benannte Vertragsstaaten:
AT BE CH FR GB LI NL SE

(71) Anmelder: Firma AVM Schmelter GmbH & Co. KG
Orkotten 44
D-4404 Telgte(DE)

(72) Erfinder: Schmelter, Peter
Haus Lütkenbeck
D-4400 Münster(DE)

(74) Vertreter: Habbel, Hans-Georg, Dipl.-Ing.
Postfach 3429 Am Kanonengraben 11
D-4400 Münster(DE)

(54) Verfahren, Anordnung und Vorrichtung zum Betreiben eines Fernsehgerätes in Krankenanstalten.

(57) Zum geldabhängigen Betreiben eines Fernsehgerätes wird der Einsatz eines Speichermoduls vorgeschlagen, der mit verschiedenen Zeiteinheiten in Abhängigkeit des aufgewandten Geldes gespeist werden kann und es ermöglicht, die im Speichermodul gespeicherten Zeiteinheiten einzeln durch Betätigen einer Taste abzurufen und in ein Steuergerät für das Fernsehgerät zu übergeben, so daß das Fernsehgerät proportional zur Zeiteinheit betrieben werden kann. Darüberhinaus kann die Steuerung über den Speichermodul durch eine Pilottonüberlagerung ausgeschaltet werden, so daß das Betreiben des Fernsehgerätes auch ohne die Kontrolle durch die übergebenen Zeiteinheiten möglich ist.

EP 0 052 822 A2

Verfahren, Anordnung und Vorrichtung zum Betreiben eines Fernsehgerätes in Krankenanstalten

Die Erfindung bezieht sich auf ein Verfahren bzw. Anordnung bzw. eine Vorrichtung zum Betreiben eines Fernsehgerätes in Krankenanstalten.

Es ist heute in vielen Krankenanstalten üblich, im Krankenzimmer ein Fernsehgerät aufzustellen und damit dem Patienten die Wahl eines Fernsehprogramms zu ermöglichen, wobei neben den üblichen Programmen zusätzliche hausinterne Programme über das Fernsehgerät gesendet werden können.

In vielen Fällen besteht dabei das Bestreben, die Kosten für das Fernsehgerät dadurch zu amortisieren, daß diese Kosten durch den das Gerät Benutzenden in Form eines Münzeinwurfes getragen werden, so daß in Abhängigkeit dieses Münzeinwurfes die Zeitdauer der Fernsehbenutzung geregelt wird. Dies erfordert zusätzliche Einrichtungen am Fernsehgerät, wobei vielfach diese Einrichtungen dann von bettlägerigen Patienten nicht bedient werden können und hierdurch häufig auch der Einbau des Fernsehgerätes erschwert wird.

Der Erfindung liegt die Aufgabe zugrunde, eine Steuerungsmöglichkeit für den Betrieb von Fernsehgeräten in Krankenanstalten zu schaffen, wobei der Aufwand zur Steuerung des Gerätes möglichst gering sein soll, andererseits dem Patienten die Möglichkeit gegeben werden soll, individuell sich an den Kosten für das Fernsehgerät zu beteiligen und der Betrieb des Gerätes vom Krankenbett aus möglich sein soll.

Hierbei geht die Erfindung davon aus, daß sogenannte Kommunikationssysteme in Nachttischen bereits üblich sind, wobei in dieser Kommunikationseinheit normalerweise bestimmte Ruf- und Lichttasten untergebracht sind, die Schaltmöglichkeit für das Radiogerät, und zwar auch dort die Wahl verschiedener Programme und der Anschluß für Ohrhörer, so daß es sich anbietet, die Steuerung für das Fernsehgerät mit in diese Kommunikationseinheit zu verlegen.

Während im vorausgehenden von einer Krankenanstalt gesprochen wird, ist es natürlich auch möglich, die gleiche Anordnung in Hotelbetrieben einzusetzen, die vielfach auch bereits im Nachttisch über solche Kommunikationseinheiten verfügen.

Die der Erfindung zugrundeliegende Aufgabe wird dadurch gelöst, daß die Inbetriebnahme des Fernsehgerätes unter Zwischenschaltung eines Speichermoduls erfolgt, der Zeiteinheiten für die Fernsehgerätbenutzung freizugeben in der Lage ist, die vorher in beliebiger Anzahl in dem Speichermodul einspeicherbar sind.

Die Anordnung gemäß der Erfindung kennzeichnet sich dadurch, daß in eine zur Inbetriebnahme des Fernsehgerätes erforderliche Leitung ein Schalter einge-

schaltet ist, der - über einen Speichermodul betrieben - geschlossen werden kann, wobei in dem Speichermodul Zeiteinheiten speicherbar sind, die bei Abruf einer Zeiteinheit die Fernsehbenutzung durch Schließen des Schalters für die Zeitspanne der Zeiteinheit ermöglichen.

Die Vorrichtung zur Steuerung eines Fernsehgerätes in einer Krankenanstalt oder einem Hotel od. dgl. kennzeichnet sich durch einen mit Zeiteinheiten aufladbaren Speichermodul, von dem Zeiteinheiten abrufbar sind und eine in dem Fernsehgerät oder einem zugehörigen Steuergerät vorgesehene Schaltung, die nach Abrufen der Zeiteinheit eine Freigabe des Fernsehgerätes für die der Zeiteinheit proportionale Zeit ermöglicht.

Gemäß der Erfindung wird also ein Speichermodul vorgesehen, der an einer zentralen Stelle, beispielsweise der Krankenhauspforte oder der Hotelrezeption nach Einwurf bestimmter Geldmengen in Abhängigkeit. und proportional zu diesen Geldmengen mit Zeiteinheiten gefüllt werden kann. Dieser Speichermodul kann aus einem mechanischen Zählwerk bestehen, kann aber in gleicher Weise auch magnetisch betrieben werden. Der Speichermodul kann vom Benutzer des Fernsehgerätes transportiert werden und dieser ist nunmehr in der Lage, den Speichermodul in die Kommunikationseinheit einzusetzen und dabei nunmehr aus dem Speichermodul eine Zeiteinheit abzurufen, die den Betrieb des Fernsehgerätes ermöglicht, und zwar so lange wie die Zeiteinheit bemessen wird. Solche Zeiteinheit kann beispielsweise eine Zeitspanne von 12 oder 18 Stunden sein oder auch eine Zeiteinheit von einer Stunde, wobei nunmehr verschiedene Verfahrensweisen möglich sind. Einmal kann so vorgegangen werden, daß nach Entnahme der Zeiteinheit aus dem Speichermodul und Übergabe der Zeiteinheit in das Steuergerät für das Fernsehen der Speichermodul entfernt werden kann und trotzdem das Fernsehgerät für die Dauer der übergebenen Zeiteinheit betreibbar ist.

Andererseits kann so vorgegangen werden, daß nur bei eingesetztem Speichermodul die Übernahme von Bruchteilen der Zeiteinheit in das Fernsehgerät möglich ist und während dieser Übernahme das Fernsehgerät betrieben werden kann, so daß bei Entnahme des Speichermoduls nunmehr der Betrieb des Fernsehgerätes unterbrochen wird und auch die Abgabe von Zeiteinheiten unterbrochen ist.

Die erfindungsgemäße Anordnung hat also den Vorteil, daß ein relativ kostengünstiges Gerät geschaffen wird, das an einer zentralen Stelle aufladbar ist und das nunmehr den Betrieb des Fernsehers ermöglicht und das dem Benutzer die Möglichkeit gibt, nach seinem Belieben und in Abhängigkeit der eingegebenen Geldmenge das Fernsehgerät zu betreiben.

Um beispielsweise im Krankenhaus krankenhauseigene Programme übertragen zu können, ist gemäß der Erfindung weiterhin vorgesehen, daß die ganze Schaltung, die durch den Speichermodul ausgelöst wird, über einen Pilotton überbrückbar ist, so daß nunmehr unabhängig von der Frage, ob Zeiteinheiten bezahlt worden sind oder nicht, das Fernsehgerät benutzt werden kann.

Vorzugsweise wird dabei so vorgegangen, daß eine Bedientaste vorgesehen ist, die bei eingesetztem Speichermodul die Abgabe von Zeiteinheiten in das Steuergerät für das Fernsehen ermöglicht, die gleichzeitig die Steuerung des Fernsehens hinsichtlich Ein- und Ausschalten gewährleistet und die weiterhin die Schaltung

verschiedener Programme ermöglicht, so daß mit dieser einen Bedientaste in Abhängigkeit des Speichermoduls der Betrieb des Fernsehgerätes vom Krankenbett aus möglich ist.

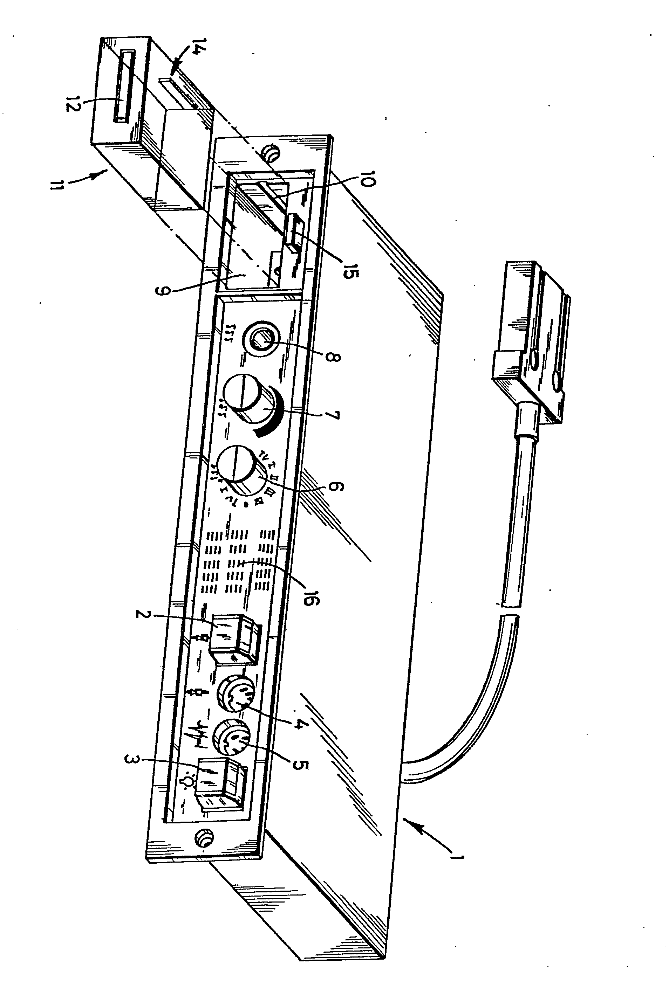

In der Zeichnung ist ein Ausführungsbeispiel der Erfindung dargestellt.

Hierbei ist in der Zeichnung eine Kommunikationseinheit 1 dargestellt, die in eine Nachttischblende einbaubar ist und in der eine Ruftaste 2 für die Krankenschwester, eine Lichttaste 3 für die Leselampe vorgesehen ist. Gleichzeitig ist eine Buchse 4 für eine Handschaltung vorgesehen und eine Buchse 5 zum Anschluß medizinischer Geräte.

Bei 6 ist der Bedienknopf für verschiedene Rundfunkprogramme und die Grundschaltung für ein Fernsehgerät vorgesehen, bei 7 ist der Lautsprecherregler erkennbar.

8 ist die Anschlußbuchse für einen Ohrhörer und bei 9 ist ein Speichermodulschacht vorgesehen, der eine nutartige Vertiefung 1o an einer Seitenwand aufweist, so daß das Einsetzen des Speichermoduls nur in einer ganz bestimmten Stelle möglich ist. Der eigentliche Speichermodul ist bei 11 dargestellt und es ist erkennbar, daß dieser Speichermodul ein Sichtfenster 12 aufweist, in dem die gespeicherten Zeiteinheiten erkennbar sind. Der an der Randkante vorgesehene rippenartige Vorsprung 14, der mit der Nut 1o zusammenarbeitet ist aus der Zeichnung deutlich zu erkennen. Bei 15 ist eine Bedientaste angeordnet, wobei die Wirkungsweise dieser erfindungsgemäßen Einrichtung wie folgt ist:

Durch Aufladen des Speichermoduls 11 an einer Lade-

stelle, die beispielsweise zentral im Eingangsbereich eines Krankenhauses angebracht sein kann, wird nunmehr der Speichermodul in Abhängigkeit der eingeworfenen Geldstücke oder von einer Bedienperson in Abhängigkeit der abgegebenen Geldmenge geladen.

Der Speichermodul ist wie aus der Zeichnung erkennbar, etwa so groß wie eine normale Zigarettenpackung und kann also leicht selbst in einer Hemdtasche transportiert werden.

Durch Einsetzen des Speichermoduls in den Speichermodulschacht der Kommunikationseinheit 1 kommt der Speichermodul nunmehr mit seinen Schaltstiften mit entsprechenden Schaltkreisen im Kommunikationsgerät in Verbindung, so daß ein dort vorhandenes Steuergerät für das Fernsehen geschaltet werden kann.

Die Schaltung erfolgt über die Bedientaste 15, durch deren erstmaliges Drücken bei eingesetztem Speichermodul 11 eine Zeiteinheit aus dem Speichermodul in das Steuergerät für das Fernsehen abgegeben wird, so daß nunmehr hierdurch automatisch das Fernsehen sendebereit für die Zeitspanne der Zeiteinheit wird. Durch nochmaliges Bedienen der Bedientaste kann nunmehr das Fernsehgerät eingeschaltet und ausgeschaltet werden, wobei die Betätigungsdauer der Bedientaste unterschiedlich sein kann, so daß dadurch ein leichtes Erkennen der möglichen Schaltfunktionen erreicht wird. Gleichzeitig kann durch diese Bedientaste auch zwischen den unterschiedlichen Fernsehprogrammen gewählt werden.

Es ist erkennbar, daß durch die Erfindung eine Steuerungsmöglichkeit geschaffen wird, die in Verbindung mit dem vorhandenen Kommunikationszentrum ein vom Krankenbett aus mögliches Steuern aller gewünschten elektrischen Funktionen ermöglicht.

Bei 16 ist in der Kommunikationseinheit ein Lautsprecher angeordnet.

An dieser Stelle ist darauf hinzuweisen, daß die durch
das Speichermodul 11 geschaffene Schaltung über einen
Pilotton überbrückt werden kann, so daß auch der
Empfang eines Fernsehprogramms dann möglich ist, wenn
dies vom Krankenhaus oder vom Hotelbetrieb gewünscht
wird, ohne daß das Gerät über einen Speichermodul bezahlt wird.

- 1 -

Patentansprüche:

1. Verfahren zum Betreiben eines Fernsehgerätes in Krankenanstalten, dadurch gekennzeichnet, daß die Inbetriebnahme des Fernsehgerätes unter Zwischenschaltung eines Speichermoduls (11) erfolgt, der Zeiteinheiten für die Fernsehgerätbenutzung freizugeben in der Lage ist, die vorher in beliebiger Anzahl in dem Speichermodul (11) einspeicherbar sind.

2. Anordnung zum Betreiben eines Fernsehgerätes in Krankenanstalten, dadurch gekennzeichnet, daß in eine zur Inbetriebnahme des Fernsehgerätes erforderliche Leitung ein Schalter eingeschaltet ist, der - über einen Speichermodul (11) betrieben - geschlossen werden kann, wobei in dem Speichermodul (11) Zeiteinheiten speicherbar sind, die bei Abruf einer Zeiteinheit die Fernsehbenutzung durch Schließen des Schalters für die Zeitspanne der Zeiteinheit ermöglicht.

3. Vorrichtung zur Steuerung eines Fernsehgerätes in Krankenanstalten, gekennzeichnet durch einen mit Zeiteinheiten aufladbaren Speichermodul (11), von dem Zeiteinheiten abrufbar sind und eine in dem Fernsehgerät oder einem zugehörigen Steuergerät vorgesehene Schaltung, die nach Abrufen der Zeiteinheit eine Freigabe des Fernsehgerätes für die der Zeiteinheit proportionale Zeit ermöglicht.

4. Anordnung nach Anspruch 2, dadurch gekennzeichnet, daß der vom Speichermodul (11) ge-

steuerte Schalter durch eine Pilottonüberlagerung überbrückbar ist,so daß der Betrieb
des Fernsehgerätes ohne und unabhängig vom
Speichermodul und der vom Speichermodul abgegebenen Zeiteinheit betreibbar ist.

5. Vorrichtung zur Durchführung des Verfahrens nach
Anspruch 1 und der Anordnung nach Anspruch 2,
dadurch gekennzeichnet, daß der Speichermodul
(11)mit einem Zählwerk arbeitet.

6. Vorrichtung nach Anspruch 3, gekennzeichnet
durch eine Bedientaste (15) für den Speichermodul (11), durch deren Betätigung das Abrufen
einer Zeiteinheit aus dem Speichermodul und das
übergeben dieser Speichereinheit in die Schaltung
für das Fernsehgerät ermöglicht wird, so daß
anschließend das Fernsehgerät ohne Einsatz des
Speichermoduls betreibbar ist.

7. Vorrichtung nach einem oder mehreren der vorhergehenden Ansprüche, dadurch gekennzeichnet, daß
der Speichermodul (11)mit einem etwa zigarettenschachtelgroßen Gehäuse besteht mit an seiner
Rückseite angeordneten Kontaktstiften und einem
die gespeicherten Zeiteinheiten aufzeigenden
Sichtfenster (12) und das Steuergerät für das
Fernsehen einen Speichermodulschacht (9) aufweist, an dessen tiefster Stelle die mit den
Schaltstiften des Speichermoduls zusammenwirkenden Kontakte angeordnet sind.

8. Vorrichtung nach Anspruch 7, gekennzeichnet
durch einen an einer Wand des Speichermoduls
(11) angeordneten rippenartigen Vorsprung (14),

0052822

- 3 -

der mit einer nutartigen Vertiefung (1o) im Speichermodulschacht (9) des Gerätes zusammenwirkt.

9. Anordnung nach einem oder mehreren der vorhergehenden Ansprüche, wenigstens nach Anspruch 6, dadurch gekennzeichnet, daß die Bedientaste (15) außer dem Abruf der Zeiteinheit und der Übergabe derselben aus dem Speichermodul (11) in das Steuergerät folgende Steuerfunktionen ermöglicht:
   1. Einschalten des Fernsehgerätes,
   2. Wahl des Fernsehprogramms,
   3. Ausschalten des Fernsehgerätes.

1o. Verfahren nach Anspruch 1, dadurch gekennzeichnet, daß nach Abnahme der Zeiteinheit aus dem Speichermodul (11) und Abgabe der Zeiteinheit in das Steuergerät für das Fernsehgerät unabhängig vom Betrieb des Fernsehgerätes die Zeiteinheit abläuft.

11. Anordnung nach einem oder mehreren der vorhergehenden Ansprüche, dadurch gekennzeichnet, daß der Speichermodulschacht in die in einem Krankenhausnachttisch vorhandene Kommunikationseinheit (1) eingebaut ist.

12. Verfahren nach Anspruch 1, dadurch gekennzeichnet, daß nur bei eingesetztem Speichermodul eine Entnahme von Zeiteinheiten und Bruchteilen von Zeiteinheiten aus dem Speichermodul in das Steuergerät für das Fernsehen möglich ist und nur während dieser Zeit der Betrieb des Fernsehens möglich ist.